# EUROPÄISCHE PATENTSCHRIFT

(11) **EP 1 914 261 B1**
(45) Veröffentlichungstag und Bekanntmachung des Hinweises auf die Patenterteilung: **20.01.2010**
(21) Anmeldenummer: 07115522.0
(22) Anmeldetag: 03.09.2007
(51) Int. Cl.: C08G 77/395, D06M 15/647

(54) **Neue phosphatierte Organosiloxanylderivate und deren Verwendung zur Behandlung von Leder**
New phosphated organo-siloxanyl derivatives and their use for treating leather
Dérivés d'organosiloxane phosphatés nouveaux et leur utilisation pour le traitement du cuir

(30) Priorität: 10.10.2006 DE 102006047898
(43) Veröffentlichungstag der Anmeldung: 23.04.2008
(73) Patentinhaber: Evonik Goldschmidt GmbH, 45127 Essen (DE)
(72) Erfinder: Herrwerth, Sascha Dr., 45134, Essen (DE); Koenig, Frank, 45884, Gelsenkirchen (DE); Maurer, Tobias Dr., 42551, Velbert (DE); Stadtmüller, Stefan Dr., 45481, Mülheim (DE)

(56) Entgegenhaltungen:
- US-A- 5 070 171
- US-A- 5 149 765
- US-B1- 6 756 034

## Beschreibung

Die Erfindung betrifft neuartige phosphatierte Organosiloxanylderivate und deren Verwendung zur Behandlung von Leder.

Naturbelassenes Leder ist aufgrund seiner chemischen Struktur und seines faserigen Aufbaus anfällig gegen Schmutz und Nässe. So positiv sich seine Saugfähigkeit, Wasseraufnahmekapazität und Durchlässigkeit bei Bekleidung und Schuhwerk in Bezug auf körpereigenen Schweiß auswirkt, so negativ wird dieses Verhalten bei Einwirkung von außen kommender Nässe beurteilt.

Eine wichtige Voraussetzung für die Gebrauchsfähigkeit von Lederbekleidung bei der privaten und gewerblichen Anwendung sind seine wasserdichten oder zumindest weitgehend wasserabweisenden Eigenschaften.

Zur Erzielung dieses Effekts wurden in der Vergangenheit bereits Imprägniermittel auf Basis tierischer, pflanzlicher und synthetischer Produkte eingesetzt.

Aufgrund ihrer anwendungstechnischen Eigenschaften haben sich die synthetischen Mittel weitestgehend durchgesetzt und hier insbesondere die Polysiloxane in ihren verschiedenen Modifizierungen.

Polysiloxane besitzen gegenüber Wasser eine hohe Grenzflächenspannung und lassen aufgrund der stark reduzierten Adhäsion zu Wasser dessen Kohäsionskräfte voll zur Wirkung kommen mit dem Effekt, dass die sich bildenden Kugeln und Tropfen von der Oberfläche abperlen.

Zur Erhöhung der rein mechanischen und elektrostatischen (van der Waals) Haftungskräfte der Polysiloxane werden funktionelle Gruppen, wie insbesondere Carboxylgruppen, in das Molekül eingebaut. Über diese Gruppen wird das Polysiloxan dauerhaft an die Fasern des Leders gebunden.

Im Vergleich zu den bis dahin verwendeten Imprägniermitteln konnte eine deutliche Langzeitwirkung erzielt werden, da die Hydrophobierung gegen Scheuern, Knicken, Abrieb oder andere äußere mechanische Belastungen beständiger ist.

In der EP-A-0 745 141 wird ein Verfahren zum Hydrophobieren von Leder und Pelzfellen in wässrigen Emulsionen und in Gegenwart von Emulgatoren mit kammartig carboxylfunktionalisierten Polysiloxanen beschrieben, bei denen die Carboxylgruppen über Spacergruppen in Form von linearen oder verzweigten C₂-C₄₀-Alkylengruppen, welche ebenfalls Heteroatome oder Heterogruppen enthalten können, an die Polymerhauptkette gebunden sind.

In der EP-A-0 324 345 wird ein Verfahren zum Hydrophobieren von Leder, Pelzen und Lederaustauschstoffen beschrieben, gemäß dem Polysiloxane mit vorzugsweise endständigen Carboxylgruppen verwendet werden, deren Carboxylgruppen in neutralisierter Form vorliegen.

Phosphatierte Siloxane werden in den Patentschriften US 5,149,765 und US 5,070,171 für die Behandlung von Fasern beschrieben. Diese werden durch die Umsetzung von Polyethersiloxanen mit P₂O₅ oder Polyphosphorsäure gewonnen.

Weiterhin werden in der Patentschrift US 6,756,034 phosphatierte Polyethersiloxane für Personal Care Applikationen beschrieben.

Die hydrophobierende Wirkung bisheriger Verbindungen ist aber verbesserungsbedürftig in Bezug auf Hydrophobierung, Flexibilität, Abriebbeständigkeit und Beständigkeit gegen extreme äußere Belastungen, wie sie insbesondere bei Ausrüstung und Kleidung für den sportlichen Out-door-Einsatz, industriell oder militärisch genutzter Arbeitskleidung, Schutzbekleidung oder dem dortigen Schuhwerk auftreten.

Aufgabe der vorliegenden Erfindung ist es daher, Hydrophobierungsmittel für Leder zu finden, welche auch unter erschwerten äußeren Belastungen verbesserte, anwendungstechnische Eigenschaften aufweisen und damit Bekleidungsleder wasserabweisend bei voller Elastizität und Weichheit ausrüsten. Bei der Behandlung soll das Hydrophobierungsmittel die Lederoberfläche nicht mit einem dünnen Film überziehen, sondern es soll in das Leder eindringen und sich an die Lederfaser binden, so dass das Leder atmungsaktiv bleibt.

Diese Aufgabe wird gelöst durch Verwendung neuartiger Organosiloxanverbindungen, die end- und/oder seitenständig mindestens einen mehrfach phosphatierten, organischen Rest, mit im Mittel ≥ 1 Phosphatgruppen, aufweisen.

Ein Gegenstand der Erfindung sind daher neuartige Organosiloxanverbindungen, die end- und/oder seitenständig im Mittel ≥ 1, vorzugsweise ≥ 2, phosphatierte, organische Reste aufweisen, erhältlich durch Anlagerung von Organopolysiloxanen der allgemeinen Formel I 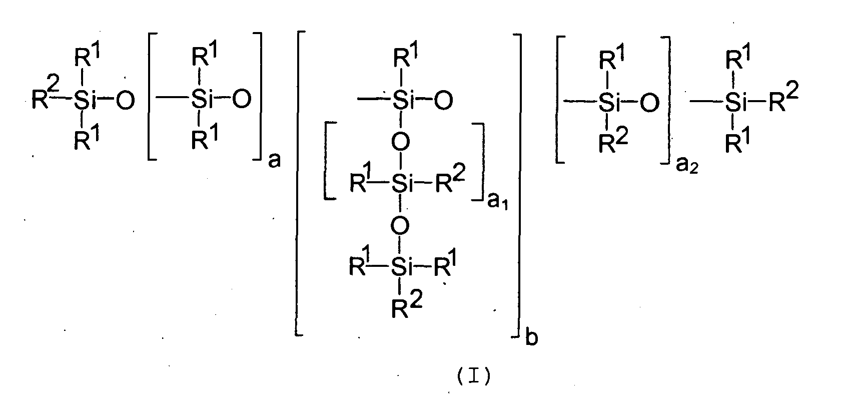 worin die Substituenten und die Indices die folgende Bedeutung haben:
- R¹ =: gleiche oder verschiedene, aliphatische oder aromatische Kohlenwasserstoffreste mit 1 bis 10 C-Atomen, die gegebenenfalls eine Trimethylsilylgruppe tragen,
- R² =: gleiche oder verschiedene R¹ oder H mit der Maßgabe, dass mindestens ein Rest R² gleich H ist,
- a, a₁ =: gleich oder verschieden 0 bis 500, vorzugsweise 0 bis 200, insbesondere 10 bis 100,
- a₂ =: 0 bis 500, vorzugsweise 0 bis 100, insbesondere 0 bis 10,
- b =: 0 bis 5,
in Gegenwart von Platin- oder Rhodiumkatalysatoren an
A) Polyhydroxyalkenylether der allgemeinen Formel II 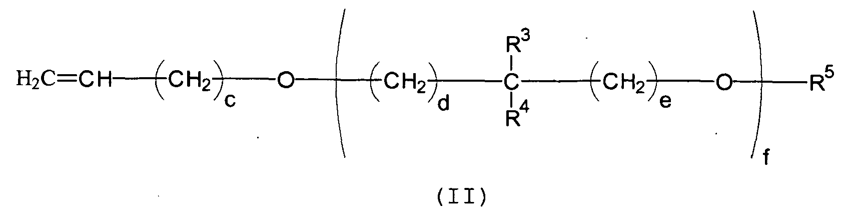 worin die Substituenten und die Indices die folgende Bedeutung haben:
   - R³ =: -H, -(CH₂)OH, aromatischer oder aliphatischer Kohlenwasserstoffrest mit 1 bis 10 C-Atomen, -OH,
   - R⁴ =: -H, -(CH₂)OH, aromatischer oder aliphatischer Kohlenwasserstoffrest mit 1 bis 10 C-Atomen, -OH,
   - R⁵ =: -H, -(CH₂)OH, aromatischer oder aliphatischer Kohlenwasserstoffrest mit 1 bis 10 C-Atomen,
   - c =: 0 bis 10, vorzugsweise 0 bis 5, insbesondere 1,
   - d =: 0 bis 10, vorzugsweise 1 bis 5, insbesondere 1,
   - e =: 0 bis 10, vorzugsweise 1 bis 5, insbesondere 1,
   - f =: 1 bis 10, vorzugsweise 1 bis 5, insbesondere 1 bis 3
   mit der Maßgabe, dass mindestens zwei OH-Gruppen vorhanden sind, und anschließende, gegebenenfalls basenkatalysierte, vollständige oder teilweise Umsetzung der OH-Gruppen mit P₂O₅ oder Polyphosporsäure
   oder durch Anlagerung an
B) Verbindungen, erhalten durch gegebenenfalls basenkatalysierte, vollständige oder teilweise Umsetzung der OH-Gruppen von Polyhydroxyalkenylethern der allgemeinen Formel II mit der Maßgabe, dass mindestens zwei OH-Gruppen vorhanden sind mit P₂O₅ oder Polyphosphorsäure.

R¹ kann innerhalb des polymeren Moleküls gleich oder verschieden sein und die Bedeutung eines niederen Alkylrestes mit 1 bis 10 C-Atomen oder eines Phenylrestes haben. Die Alkylreste können geradkettig oder verzweigt vorliegen. Vorzugsweise sind mindestens 90 % der Reste R¹ Methylreste.

Beispiele für geeignete Polyhydroxyalkenylether der Formel II, die sowohl über mindestens eine hydrosilylierbare Doppelbindung als auch über mindestens zwei veresterbare primäre Hydroxylgruppen verfügen, sind:

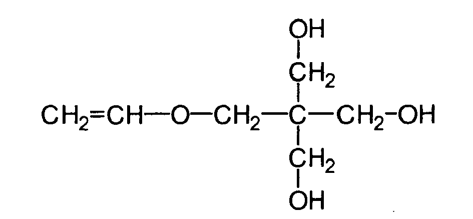

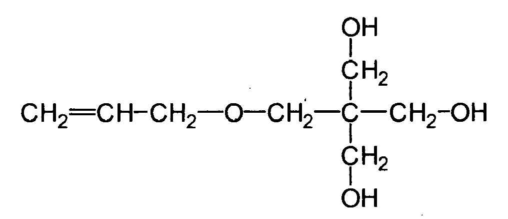

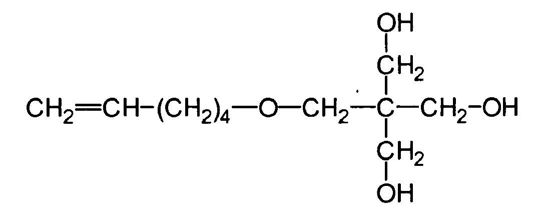

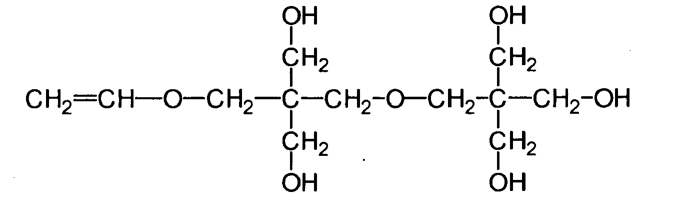

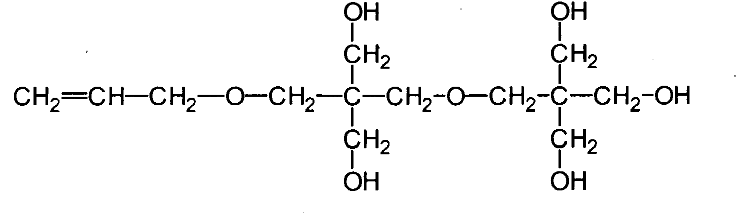

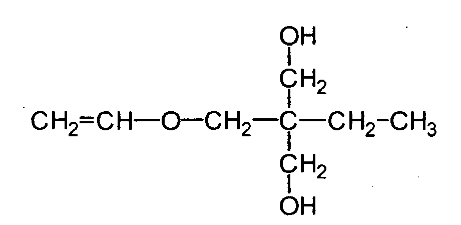

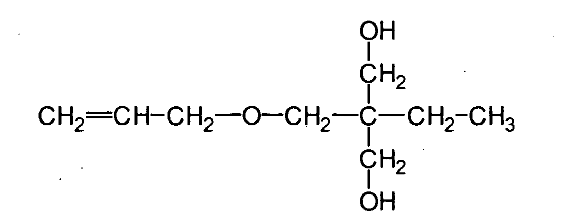

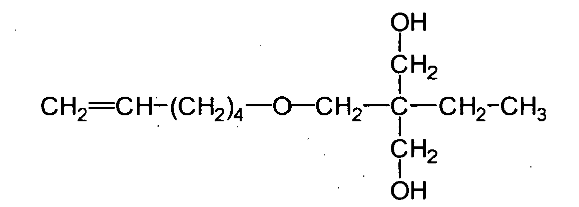

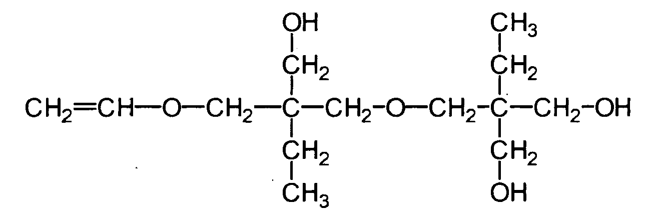

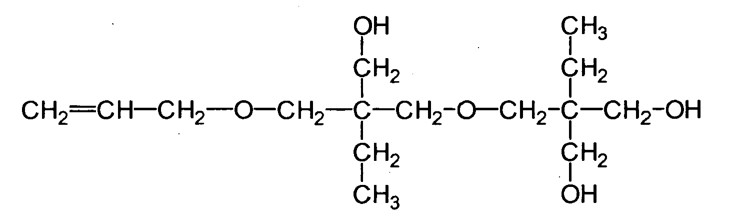

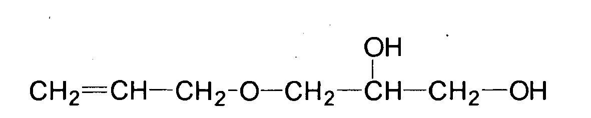

Weitere, geeignete Polyhydroxyalkenylether sind ferner Polyglycerinmonoallylether.

Die Addition der Verbindungen der allgemeinen Formel(II) an Si-H-Gruppen enthaltende Siloxane der allgemeinen Formel (I) (Hydrosilylierung) erfolgt in Gegenwart von literaturbekannten Platinkatalysatoren unter den üblichen Bedingungen, wie zum Beispiel in den Patentschriften US 2,970,150, US 3,159,601, US 3,159,662, US 3,220,972, US 3,419,593, US 3,474,123, US 5,756, 795 beschrieben.

Bei der Umsetzung der alkoholfunktionellen Siloxane mit P₂O₅ oder Polyphosphorsäure nach an sich bekannten Verfahren, wie zum Beispiel in den Patentschriften US 5,070,171 oder US 5,149,765 beschrieben, bilden sich Phosphorsäuremono-, -di- und/oder -triester. Des Weiteren können im Reaktionsprodukt Oligophosphatester oder Polyphosphatester vorliegen.

Es ist dem Fachmann geläufig, dass die Verbindungen in Form eines Gemisches mit einer im Wesentlichen durch statistische Gesetze geregelten Verteilung vorliegen. Die Werte für die Indices a und b stellen deshalb Mittelwerte dar.

Wird in Gegenwart von organischen und/oder anorganischen Basen, wie zum Beispiel primären, sekundären oder insbesondere tertiären Aminen, gearbeitet, so bilden sich die entsprechenden leicht filtrierbaren Salze bzw. Ammoniumsalze. Erfindungsgemäß bevorzugt sind tertiäre Amine(R)₃N, worin R gleiche oder verschiedene Kohlenwasserstoffreste sein können.

Die erfindungsgemäßen Produkte werden bevorzugt nach der Verfahrensvariante A), Hydrosilylierung mit nachfolgender Umsetzung mit P₂O₅ oder Polyphosphorsäure hergestellt.

Ein weiterer Gegenstand der Erfindung ist die Verwendung der erfindungsgemäßen phosphatfunktionellen Organosiloxanverbindungen zur Behandlung von Fasern, Geweben, Non-Wovens, Flächengebilden aus anorganischen und/oder organischen Werkstoffen wie Metall, Glas, Keramik, Papier, Kartonagen, Textilien auf der Basis von tierischen, pflanzlichen und/oder synthetischen Fasern und insbesondere Leder.

Weitere Gegenstände der Erfindung sind durch die Ansprüche gekennzeichnet.

### BEISPIELE

Nachfolgende Beispiele sollen zur Verdeutlichung der Erfindung dienen. Sie stellen jedoch keinerlei Einschränkung dar.

### Beispiel 1

1a) 205 g (30 % Überschuß) 1,1,1-Tris-(hydroxymethyl)-propan-monoallylether werden in einem 2-1-Vierhalskolben, ausgestattet mit Intensivkühler, Thermometer und Tropftrichter, zusammen mit 15 ppm Diaminocyclobutandicarboxylatoplatin als Katalysator in inerter Atmosphäre auf 100 °C aufgeheizt. Bei Erreichen der Temperatur werden 1000 g endständig Si-H-funktionalisiertes Polydimethylsiloxan der mittleren Kettenlänge N = 30 und der allgemeinen Formel HMe₂SiO(SiMe₂O)₃₀SiMe₂H innerhalb von 30 Minuten zugetropft. Nach beendeter Zugabe wird das Reaktionsgemisch noch solange bei 100°C gerührt, bis nach ca. 3 Stunden der Umsatz > 99,5 % erreicht wird.
   Nach Entfernung der flüchtigen Bestandteile im Ölpumpenvakuum bei 120 °C und Filtration von Katalysatorresten erhält man ein niedrigviskoses Öl mit einer Hydroxylzahl von 100 mg KOH/g, dem laut ¹H- und ²⁹Si-NMR-Spektren die allgemeine Formel zukommt: 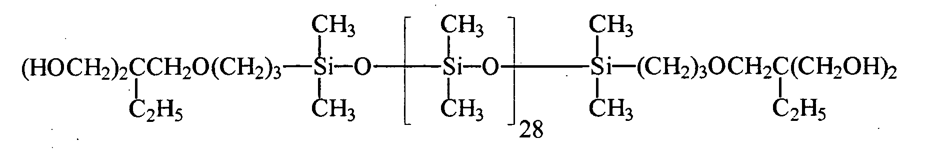
1b) Umsetzung des unter 1a) beschriebenen α,ω-Bis-hydroxyalkylsiloxans mit P₂O₅ in Gegenwart von Triethylamin:
   In einem 2-1-Dreihalskolben, der mit einem Intensivkühler, einem Thermometer und einem Tropftrichter sowie einem Stickstoffanschluss ausgerüstet ist, werden in einer Stickstoffatmosphäre 60 g P₂O₅ und 85,5 g Triethylamin vorgelegt und 840 g des unter 1a) beschriebenen α,ω-Bis-hydroxyalkylsiloxans mit einer Hydroxylzahl von 100 mg KOH/g bei 50 °C zugetropft. Die Lösung wird auf 70°C aufgeheizt und bei dieser Temperatur 4 Stunden gerührt. Das Produkt wird nach dem Abkühlen auf Raumtemperatur filtriert. Es wird ein klares, flüssiges Produkt erhalten.

### Beispiel 2

2a) 152 g (30 % Überschuss) 1,1,1-Tris-(hydroxymethyl)-propan-monoallylether werden in einem 1-1-Vierhalskolben, ausgestattet mit Intensivkühler, Thermometer und Tropftrichter, zusammen mit 20 ppm Diaminocyclobutandicarboxylatoplatin als Katalysator in inerter Atmosphäre auf 100°C aufgeheizt. Bei Erreichen der Temperatur werden 500 g mittelständig Si-H-funktionalisiertes Polydimethylsiloxan der mittleren Kettenlänge N = 50 und der allgemeinen Formel Me₃SiO(SiMeH)₅(SiMe₂O)₄₃SiMe₃ innerhalb von 30 Minuten zugetropft. Nach beendeter Zugabe wird das Reaktionsgemisch noch solange bei 100°C gerührt, bis nach ca. 3 Stunden der Umsatz > 99,5 % erreicht wird.
   Nach Filtration von Katalysatorresten und Abdestillation der flüchtigen Reaktionsnebenprodukte und des Überschuss 1,1,1-Tris-(hydroxymethyl)-propan-monoallylether bei 150°C im Ölpumpenvakuum erhält man ein mäßig viskoses Öl mit einer Hydroxylzahl von 127 mg KOH/g, dem laut ¹H- und ²⁹Si-NMR-Spektren die allgemeine Formel zukommt: 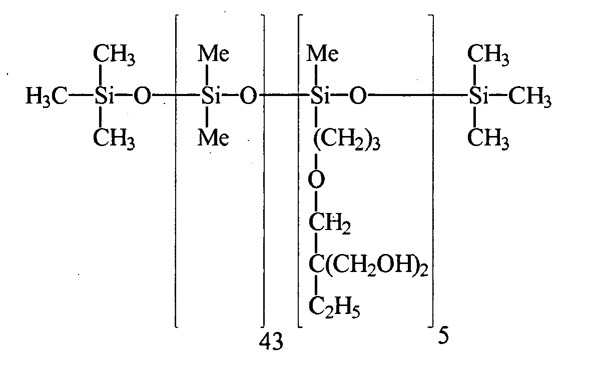
2b) Umsetzung des unter 2a) beschriebenen mittelständigen, modifiziereten Hydroxyalkylsiloxans mit P₂O₅:
   In einem 200-ml-Dreihalskolben, der mit einem Intensivkühler, einem Thermometer und einem Tropftrichter sowie einem Stickstoffanschluss ausgerüstet ist, werden in einer Stickstoffatmosphäre 6,7 g P₂O₅ und 9,5 g Triethylamin vorgelegt und 100 g des unter 2a) beschriebenen Hydroxyalkylsiloxans mit einer Hydroxylzahl von 127 mg KOH/g bei 50 °C zugetropft. Die Lösung wird auf 70 °C aufgeheizt und bei dieser Temperatur 4 Stunden gerührt. Das Produkt wird nach dem Abkühlen auf Raumtemperatur filtriert. Es wird ein klares, flüssiges Produkt erhalten.

### Beispiel 3

3a) 190 g (30 % Überschuss) 1-Glycerin-monoallylether werden in einem 2-1-Vierhalskolben, ausgestattet mit Intensivkühler, Thermometer und Tropftrichter, zusammen mit 15 ppm Diaminocyclobutandicarboxylatoplatin als Katalysator in inerter Atmosphäre auf 100°C aufgeheizt. Bei Erreichen der Temperatur werden 1200 g endständig Si-H-funktionalisiertes Polydimethylsiloxan der mittleren Kettenlänge N = 30 und der allgemeinen Formel HMe₂SiO(SiMe₂O)₃₀SiMe₂H innerhalb von 30 Minuten zugetropft. Nach beendeter Zugabe wird das Reaktionsgemisch noch solange bei 100°C gerührt, bis nach ca. 3 Stunden der Umsatz > 99,5 % erreicht wird.
   Nach Entfernung der flüchtigen Bestandteile im Ölpumpenvakuum bei 120 °C und Filtration von Katalysatorresten erhält man ein niedrigviskoses Öl mit einer Hydroxylzahl von 112 mg KOH/g, dem laut ¹H- und ²⁹Si-NMR-Spektren die allgemeine Formel zukommt: 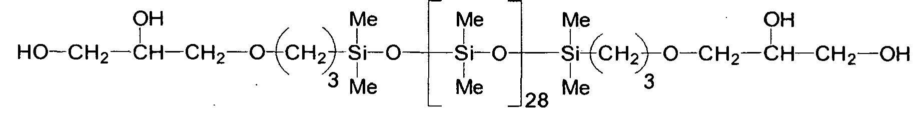
3b) Umsetzung des unter 3a) beschriebenen Bis-hydroxyalkylsiloxans mit Polyphosphorsäure:
   In einem 2-1-Dreihalskolben, der mit einem Intensivkühler, einem Thermometer und einem Tropftrichter sowie einem Stickstoffanschluss ausgerüstet ist, werden in einer Stickstoffatmosphäre 60 g Polyphosphorsäure und 150 g Tributylamin vorgelegt und 1000 g des unter 3a) beschriebenen Hydroxyalkylsiloxans mit einer Hydroxylzahl von 112 mg KOH/g bei 50 °C zugetropft. Die Lösung wird auf 70 °C aufgeheizt und bei dieser Temperatur 4 Stunden gerührt. Das Produkt wird nach dem Abkühlen auf Raumtemperatur filtriert. Es wird ein klares, flüssiges Produkt erhalten.
   Die erfindungsgemäßen polyphosphatfunktionellen Polysiloxane werden zur Anwendung als Additiv in einem Gewichtsanteil zwischen 0,01 und 20 % in eine wässrige oder lösemittelhaltige Formulierung eingearbeitet. Die Anwendung erfindungsgemäßer polyphosphatfunktioneller Polysiloxane kann in Lösung oder als Emulsion erfolgen. Weitere Bestandteile der Formulierung neben dem Lösemittel und dem polyphosphatfunktionellen Polysiloxan in der Formulierung können beispielsweise Emulgatoren, Paraffin- und/oder Mineralöle sein.
   Mit der Verwendung der erfindungsgemäßen polyphosphatfunktionellen Polysiloxane erzielt man eine hervorragende Hydrophobierwirkung bei gleichzeitiger Verbesserung der Griffqualität. Dies wird ermöglicht durch das besondere Bauprinzip der erfindungsgemäßen polyphosphatfunktionellen Polysiloxane.

### Anwendungstechnischer Vergleich

### (Angaben in Gew.-% bezogen auf die Gesamtformulierung)

Lederhydrophobierungsmittel werden idealerweise aus wässrigen Emulsionen (5 bis 30 %ig) unter Einsatz von Emulgatoren und standardisierten Bedingungen wie Temperatur und pH-Wert appliziert. Als Emulgatoren eignen sich im besonderen Maße C8-C24 Acylamidocarbonsäuren, z.B. Fettalkoholsarcosinate. Zur Bestimmung der Wirkungseigenschaften werden 10 %ige Emulsionen der erfindungsgemäßen Verbindungen (Beispiele 1 bis 3) hergestellt.

### Präparation einer Emulsion für die anwendungstechnische Ausprüfung

2,5 g einer 50 % NaOH und 1,3 g Zitronensäure werden in 43,6 g Wasser gelöst und auf 80°C erwärmt. Bei dieser Temperatur wird eine Mischung, bestehend aus 31,3 g eines handelsüblichen paraffinischen Mineralöls, 10 g des erfindungsgemäßen polyphosphatfunktionellen Polysiloxans (Beispiele 1 bis 3), 7,5 g Laurylsarcosinat (REWOPOL® SK 275, Fa. Goldschmidt-REWO) und 3,5 g Sulphosuccinat (REWOPOL® SB FA 12 P, Fa. Goldschmidt-REWO), sukzessive auf 85°C erwärmt, zugegeben und anschließend gerührt, bis eine homogene, milchige Emulsion entsteht, die anschließend auf Raumtemperatur abgekühlt wird. Im Falle der Vergleichsproben werden bei der Herstellung der Emulsion das Siloxan weggelassen und durch handelsübliches paraffinisches Mineralöl (Vergleichsbeispiel a)) mit Viskositäten von 40 bis 60 mPas bei 25°C bzw. Silikonöl (Vergleichsbeispiel b)) mit Viskositäten von 50 bis 100 mPas bei 25°C ersetzt.

Für die anwendungstechnische Ausprüfung zur Bestimmung der einfachen Wasseraufnahmemenge wird Wet-blue LGR Standard der Falzstärke 2 mm nach der folgenden Vorschrift behandelt und geprüft:
4 x 4 cm große Stücke Wet-blue Leder werden zunächst mit 300 Gew.-%, bezogen auf das Gewicht des Leders, einer wässrigen basischen Lösung neutralisiert und anschließend mit Wasser neutral gewaschen. Anschließend wird das Leder 90 Minuten bei 50°C in der 2 %igen Emulsion bei pH 5,5 behandelt. Danach wird mit Ameisensäure in mehreren Schritten über einem Zeitraum von 40 Minuten bis auf pH 3,5 abgesäuert. Nach 2-maligem Waschen mit 300 und 150 % Wasser wird nochmals für 60 Minuten bei 40°C mit Chromsalz (Chromosal® BD, Fa. Lanxess) nachfixiert. Das anschließende Trocknen bei 45°C für 30 Minuten erfolgt nach 2-maligem Waschen mit 400 % Wasser bei 35 und 25°C. Das Leder wird anschließend bei konstanter 50 %iger relativer Luftfeuchte und konstanten 21°C für 7 Tage konditioniert. Anschließend wird das so behandelte Lederstück in 300 ml Wasser bei 20°C gelagert. Die Wasseraufnahme wird nach Entfernung anhaftender Wassertropfen durch Wägung bestimmt.

Die Gewichtsdifferenz, verursacht durch die Wasseraufnahme, ist in %, bezogen auf das trockene, imprägnierte Leder, angegeben.

Die Ergebnisse sind in der nachfolgenden Tabelle 1 aufgeführt.

**Tabelle 1**

| Beispiel/Additiv | Wasseraufnahme nach 6 Stunden(%) | Wasseraufnahme nach 24 Stunden(%) |
|---|---|---|
| Vergleichsprobe a) | 106 | 194 |
| Verbindung 1 | 70 | 115 |
| Verbindung 2 | 82 | 135 |
| Verbindung 3 | 74 | 123 |

Wie ersichtlich, wird das Wasseraufnahmevermögen von Leder nach der Behandlung mit den erfindungsgemäßen polyphosphatfunktionellen Organosiloxanylderivaten deutlich herabgesetzt.

Für die anwendungstechnische Ausprüfung nach dem Measertest (ASTM D 2059-99) wird Wet-blue LGR Standard der Falzstärke 2 mm nach einem Verfahren zur Herstellung von Schuhoberleder, wie im Folgenden beschrieben, behandelt und hydrophobiert. (Alle Angaben in Gew.-% bezogen auf das Falzgewicht des Leders.)

Das Ausgangsmaterial wird bei 35°C mit 200 % Wasser gewaschen und mit 0,5 % Ameisensäure in 20 Minuten auf einen pH von 3,2 eingestellt. Die Nachchromierung läuft in folgenden Schritten nach Ablassen der Flotte:
Zu 100 Wasser bei 35°C werden 4,0 % eines Aluminium-Syntans (z.B. Trupotan® UK, Fa. Trumpler) und 3,0 % eines Chromgerbstoffes (z.B. Chromosal® B-D, Fa. Lanxess) zugegeben und 45 Minuten behandelt, ehe durch Zugabe von 1,0 % Natriumformiat für weitere 45 Minuten auf pH 4 eingestellt wird.

Nach Ablassen der Flotte, Waschen bei 35°C mit 300 % Wasser und erneutem Ablassen wird wie folgt neutralisiert:
Nach Zugabe von 150 % Wasser bei 35°C und 4,0 % eines Neutralisationsgerbstoffes (z.B. Trupotan® NG Fa. Trumpler) wird 60 Minuten behandelt. Anschließend werden 3,0 % eines Polymer-Nachgerbstoffes (z.B. Trupotan® AMP Fa. Trumpler) zugegeben und für 20 Minuten behandelt. Zuletzt werden 3,0 % eines natürlichen Polymers (z.B. Trupotan® UPH Fa. Trumpler) nochmals 60 Minuten behandelt, wobei sich schließlich ein pH-Wert von 5,6 einstellt, bevor die Flotte abgelassen wird.

Vor der Nachgerbung wird mit 300 % Wasser für 20 Minuten gewaschen, die Flotte abgelassen und mit 80 % Wasser bei 25°C versetzt. Anschließend werden 2,5 % der Beispielformulierung, basierend auf den jeweiligen erfindungsgemäßen Verbindungen bzw. dem nichterfindungsgemäßen Vergleichsbeispiel b), und 3,0 % eines Polymer-Nachgerbstoffes (z.B. Trupotan® RKM, Fa. Trumpler) hinzugeben und für 20 Minuten behandelt.

Nach dem Färben bei 50°C wird mit 2,0 Ameisensäure für 45 Minuten auf pH 3,8 eingestellt und die Flotte abgelassen.

Vor der Fettung wird erneut mit 300 % Wasser bei 50°C für 20 Minuten gewaschen und abgelassen. Für die Fettung werden 200 % Wasser auf 50°C erwärmt, 5,0 % der Beispielformulierung, enthaltend die erfindungsgemäße Verbindung bzw. das nichterfindungsgemäße Vergleichsbeispiel b), hinzugegeben und für 45 Minuten behandelt, ehe mit 1,0 % Ameisensäure über 45 Minuten auf ph 3,6 abgesäuert und die Flotte abgelassen wird.

Zur Fixierung wird nach dem Waschen bei 35°C mit 300 % Wasser für 35 Minuten behandelt und beim Ablassen der Flotte wird das Leder mit 150 % Wasser bei 35°C, mit 3,0 % eines Chromgerbstoffes (z.B. Chromosal® B-D, Fa. Lanxess) und mit 0,4 % eines Fixiermittels (z.B. Trupofix® WP, Fa. Trumpler) für 90 Minuten behandelt. Nach Ablassen der Flotte wird 3-mal mit je 300 % Wasser bei 50°C gewaschen.

Vor der Messung wird das Leder über Nacht ausgereckt, vakuumiert, hängegetrocknet, konditioniert und anschließend gestollt.

Zur Bestimmung der wasserabweisenden Eigenschaften wurde der Measertest nach ASTM D 2059-99 durchgeführt. Die Ergebnisse sind in der nachfolgenden Tabelle 2 zusammengefasst.

**Tabelle 2**

| Beispiel/Additiv | Anzahl der Knickungen bei Wasserdurchtritt (Mittelwert) |
|---|---|
| Vergleichsprobe b) | 4250 |
| Verbindung 1 | >45000 |
| Verbindung 2 | 15230 |
| Verbindung 3 | >45000 |

Die sehr hohe Anzahl der Knickungen bis zum Wasserdurchtritt bestätigt die sehr guten hydrophobierenden Eigenschaften der die erfindungsgemäßen Verbindungen enthaltenden Emulsionen, da in der Regel ein Schuhoberleder als gut hydrophobiert gilt, wenn ein Wasserdurchtritt bei 15000 bis 20000 Knickungen erfolgt.

## Patentansprüche

1. Organosiloxanverbindungeri, die end- und/oder seitenständig im Mittel 1, vorzugsweise ≥ 2, phosphatierte, organische Reste aufweisen, erhältlich durch Anlagerung von Organopolysiloxanen der allgemeinen Formel I 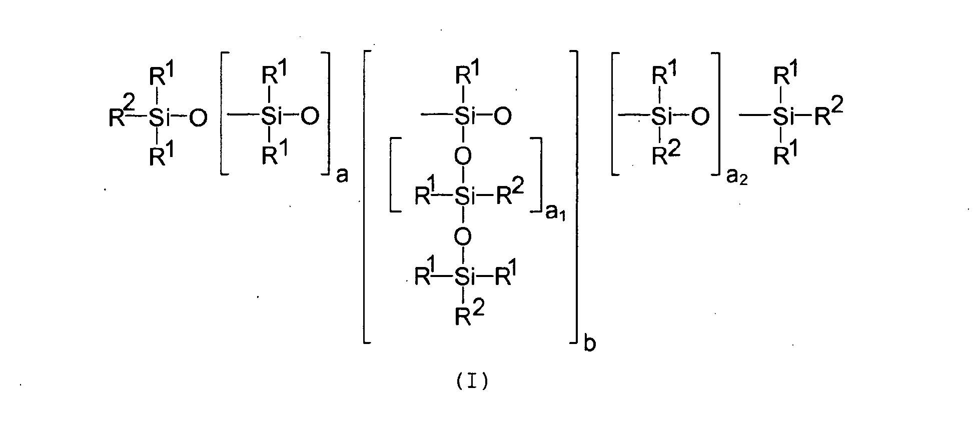 worin die Substituenten und die Indices die folgende Bedeutung haben:
R¹ = gleiche oder verschiedene, aliphatische oder aromatische Kohlenwasserstoffreste mit 1 bis 10 C-Atomen, die gegebenenfalls eine Trimethylsi- lylgruppe tragen,
R² = gleiche oder verschiedene R¹ oder H, mit der Maßgabe, dass mindestens ein Rest R² gleich H ist,
a,a₁ = gleich oder verschieden 0 bis 500,
a₂ = 0 bis 500,
b = 0 bis 5
in Gegenwart von Platin- oder Rhodiumkatalysatoren an
A) Polyhydroxyalkenylether der allgemeinen Formel II 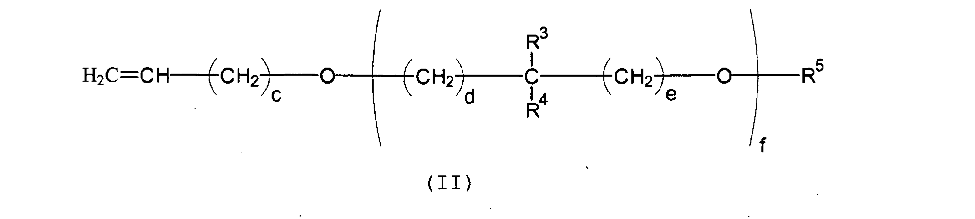 worin die Substituenten und die Indices die folgende Bedeutung haben:
R³ = -H, -(CH₂)OH, aromatischer oder alipha- tischer Kohlenwasserstoffrest mit 1 bis 10 C-Atomen, -OH,
R⁴ = -H, -(CH₂)OH, aromatischer oder alipha- tischer Kohlenwasserstoffrest mit 1 bis 10 C-Atomen, -OH,
R⁵ = -H, -(CH₂)OH, aromatischer oder alipha- tischer Kohlenwasserstoffrest mit 1 bis 10 C-Atomen,
c = 0 bis 10,
d = 0 bis 10,
e = 0 bis 10,
f = 1 bis 10
mit der Maßgabe, dass mindestens zwei OH-Gruppen vorhanden sind, und anschließende, gegebenenfalls basenkatalysierte, vollständige oder teilweise Umsetzung der OH-Gruppen mit P₂O₅ oder Polyphosporsäure
oder durch Anlagerung an
B) Verbindungen, erhalten durch gegebenenfalls basenkatalysierte, vollständige oder teilweise Umsetzung der OH-Gruppen von Polyhydroxyalkenylethern der allgemeinen Formel II mit der Maßgabe, dass mindestens zwei OH-Gruppen vorhanden sind mit P₂O₅ oder Polyphosphorsäure.

2. Polyphosphatfunktionelle Siloxane nach Anspruch 1, **dadurch gekennzeichnet, dass** mindestens 90 % der Reste R¹ Methylreste sind.

3. Polyphosphatfunktionelle Siloxane nach einem der Ansprüche 1 und/oder 2, **dadurch gekennzeichnet, dass** die Reste R³ und R⁴ in den Verbindungen der allgemeinen Formel (II) -CH₂-OH und/oder -CH₂-CH₃ bedeuten mit der Maßgabe, dass pro Molekül mindestens zwei OH-Gruppen vorhanden sind.

4. Polyphosphatfunktionelle Siloxane nach einem der Ansprüche 1 bis 3, **dadurch gekennzeichnet, dass** c) 0 oder 1 und f) 1 bis 3 ist.

5. Verfahren zur Herstellung von Organosiloxanverbindungen nach einem der Ansprüche 1 bis 4 durch Anlagerung von Organopolysiloxanen der allgemeinen Formel I 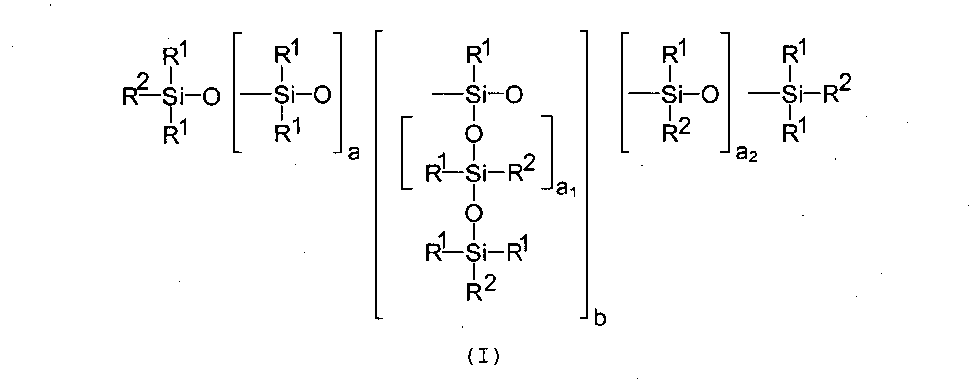 worin die Substituenten und die Indices die folgende Bedeutung haben:
R¹ = gleiche oder verschiedene, aliphatische oder aromatische Kohlenwasserstoffreste mit 1 bis 10 C-Atomen, die gegebenenfalls eine Tri- methylsilylgruppe tragen,
R² = gleiche oder verschiedene R¹ oder H mit der Maßgabe, dass mindestens ein Rest R² gleich H ist,
a,a₁ = gleich oder verschieden 0 bis 500,
a₂ = 0 bis 500,
b = 0 bis 5
in Gegenwart von Platin- oder Rhodiumkatalysatoren an
A) Polyhydroxyalkenylether der allgemeinen Formel II 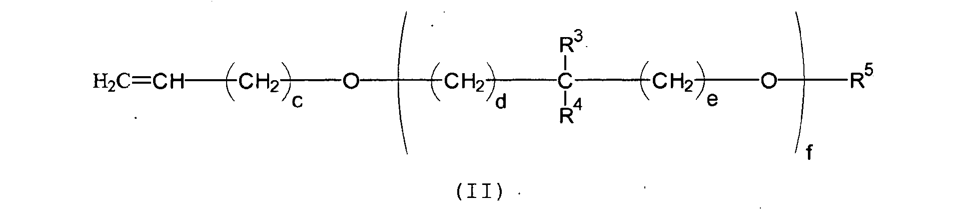
R³ = -H, -(CH₂)OH, aromatischer oder alipha- tischer Kohlenwasserstoffrest mit 1 bis 10 C-Atomen, -OH,
R⁴ = -H, -(CH₂)OH, aromatischer oder alipha- tischer Kohlenwasserstoffrest mit 1 bis 10 C-Atomen, -OH,
R⁵ = -H, -(CH₂)OH, aromatischer oder alipha- tischer Kohlenwasserstoffrest mit 1 bis 10 C-Atomen,
c = 0 bis 10,
d = 0 bis 10,
e = 0 bis 10,
f = 1 bis 10
mit der Maßgabe, dass mindestens zwei OH-Gruppen vorhanden sind, und anschließende, gegebenenfalls basenkatalysierte, vollständige oder teilweise Umsetzung der OH-Gruppen mit P₂O₅ oder Polyphosphorsäure
oder durch Anlagerung an
B) Verbindungen, erhalten durch gegebenenfalls basenkatalysierte, vollständige oder teilweise Umsetzung der OH-Gruppen von Polyhydroxyalkenylethern der allgemeinen Formel II mit der Maßgabe, dass mindestens zwei OH-Gruppen vorhanden sind mit P₂O₅ oder Polyphosphorsäure.

6. Wässrige Dispersionen oder Emulsionen, enthaltend polyphosphatfunktionelle Siloxane, nach einem der Ansprüche 1 bis 4 und 5 in Konzentration von 0,01 bis 50 Gew.-%.

7. Verwendung der wässrigen Dispersionen oder Emulsionen nach Anspruch 6 als Zusatzstoff in Konzentrationen von 0,01 bis 50,0 Gew.-%,' bezogen auf die Gesamtformulierung, zur Behandlung von Fasern und Flächengebilden aus anorganischen und/oder organischen Werkstoffen.

8. Verwendung von polyphosphatfunktionellen Siloxanen nach Anspruch 6 zur Behandlung von Fasern, Geweben, NonWovens, Flächengebilden aus anorganischen und/oder organischen Werkstoffen wie Metall, Glas, Keramik, Papier, Kartonagen.

9. Verwendung von polyphosphatfunktionellen Siloxanen nach Anspruch 6 zur Behandlung von Textilien auf der Basis von tierischen, pflanzlichen und/oder synthetischen Fasern.

10. Verwendung von polyphosphatfunktionellen Siloxanen nach Anspruch 6 zur Behandlung von Leder.

## Claims

1. Organosiloxane compounds having terminally and/or laterally, on average ≥ 1, preferably ≥ 2, phosphated, organic radicals obtainable by addition of organopolysiloxanes of the general formula I 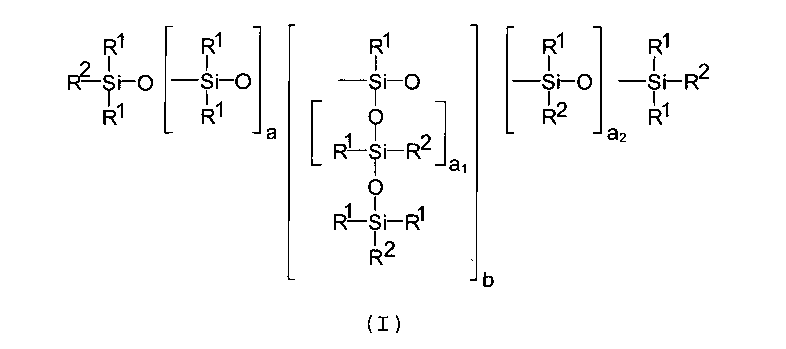 where
R¹ = identical or different, aliphatic or aromatic hydrocarbyl radicals having 1 to 10 carbon atoms, optionally bearing a trimethylsilyl group,
R² = identical or different R¹ radicals or H, with the proviso that at least one R² is H,
a, a₁ = identically or differently 0 to 500,
a₂ = 0 to 500,
b = 0 to 5
in the presence of platinum or rhodium catalysts onto
A) polyhydroxyalkenyl ethers of the general formula II 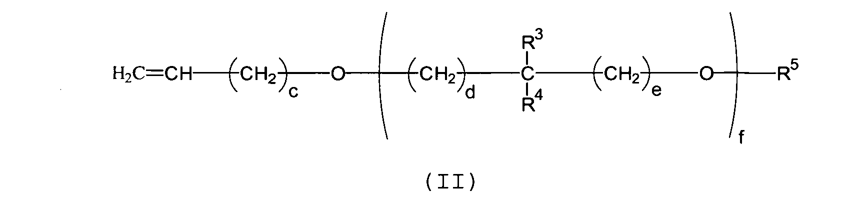 where
R³ = -H, -(CH₂)OH, aromatic or aliphatic hydrocarbyl radical having 1 to 10 carbon atoms, -OH,
R⁴ = -H, -(CH₂)OH, aromatic or aliphatic hydrocarbyl radical having 1 to 10 carbon atoms, -OH,
R⁵ = -H, -(CH₂)OH, aromatic or aliphatic hydrocarbyl radical having 1 to 10 carbon atoms,
c = 0 to 10,
d = 0 to 10,
e = 0 to 10,
f = 1 to 10
with the proviso that there are at least two OH groups, and subsequent, optionally base-catalyzed, complete or partial reaction of the OH groups with P₂O₅ or polyphosphoric acid
or by addition onto
B) compounds obtained by optionally base-catalyzed, complete or partial reaction of the OH groups of polyhydroxyalkenyl ethers of the general formula II with the proviso that there are at least two OH groups, with P₂O₅ or polyphosphoric acid.

2. Polyphosphate-functional siloxanes according to Claim 1, **characterized in that** at least 90% of the R¹ radicals are methyl radicals.

3. Polyphosphate-functional siloxanes according to either of Claims 1 and/or 2, **characterized in that** the R³ and R⁴ radicals in the compounds of the general formula II are -CH₂-OH and/or -CH₂-CH₃, with the proviso that there are at least two OH groups per molecule.

4. Polyphosphate-functional siloxanes according to any one of Claims 1 to 3, **characterized in that** c) is 0 or 1 and f) is 1 to 3.

5. Process for preparing organosiloxane compounds according to any one of Claims 1 to 4 by addition of organopolysiloxanes of the general formula I 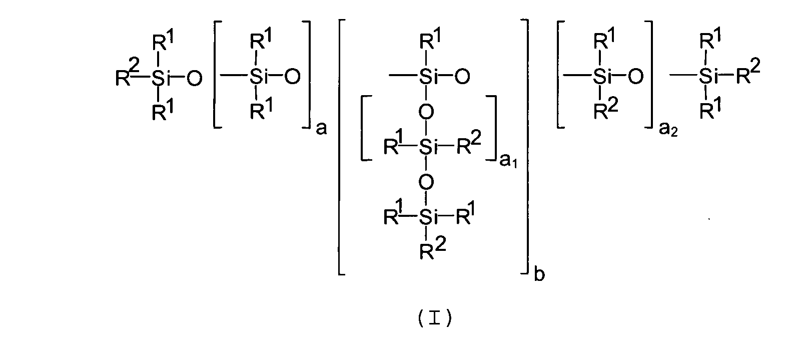 where
R¹ = identical or different, aliphatic or aromatic hydrocarbyl radicals having 1 to 10 carbon atoms, optionally bearing a trimethylsilyl group,
R² = identical or different R¹ radicals or H, with the proviso that at least one R² is H,
a, a₁ = identically or differently 0 to 500,
a₂ = 0 to 500,
b = 0 to 5
in the presence of platinum or rhodium catalysts onto
A) polyhydroxyalkenyl ethers of the general formula II 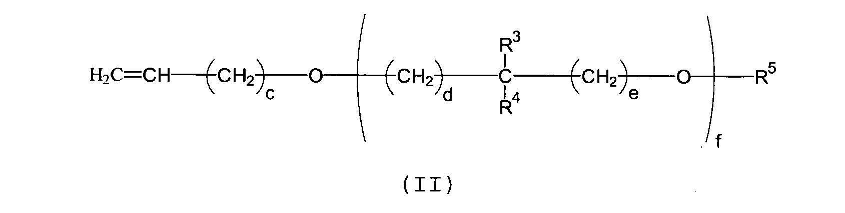 where
R³ = -H, -(CH₂)OH, aromatic or aliphatic hydrocarbyl radical having 1 to 10 carbon atoms, -OH,
R⁴ = -H, -(CH₂)OH, aromatic or aliphatic hydrocarbyl radical having 1 to 10 carbon atoms, -OH,
R⁵ = -H, -(CH₂)OH, aromatic or aliphatic hydrocarbyl radical having 1 to 10 carbon atoms,
c = 0 to 10,
d = 0 to 10,
e = 0 to 10,
f = 1 to 10
with the proviso that there are at least two OH groups, and subsequent, optionally base-catalyzed, complete or partial reaction of the OH groups with P₂O₅ or polyphosphoric acid
or by addition onto
B) compounds obtained by optionally base-catalyzed, complete or partial reaction of the OH groups of polyhydroxyalkenyl ethers of the general formula II with the proviso that there are at least two OH groups, with P₂O₅ or polyphosphoric acid.

6. Aqueous dispersions or emulsions comprising polyphosphate-functional siloxanes according to any one of Claims 1 to 4 and 5 in a concentration from 0.01% to 50% by weight.

7. Use of the aqueous dispersions or emulsions according to Claim 6 as an additive material in concentrations of 0.01% to 50.0% by weight, based on the entire formulation, for treating fibers and sheets of inorganic and/or organic materials of construction.

8. Use of polyphosphate-functional siloxanes according to Claim 6 for treating fibers, wovens, nonwovens, sheets of inorganic and/or organic materials of construction such as metal, glass, ceramic, paper, card.

9. Use of polyphosphate-functional siloxanes according to Claim 6 for treating textiles based on animal, vegetable and/or synthetic fibers.

10. Use of polyphosphate-functional siloxanes according to Claim 6 for treating leather.

## Revendications

1. Composés de type organosiloxane, qui comportent en position terminale ou latérale en moyenne ≥ 1, de préférence ≥ 2, radicaux organiques phosphatés, pouvant être obtenus par fixation par addition d'organopolysiloxanes de formule générale I 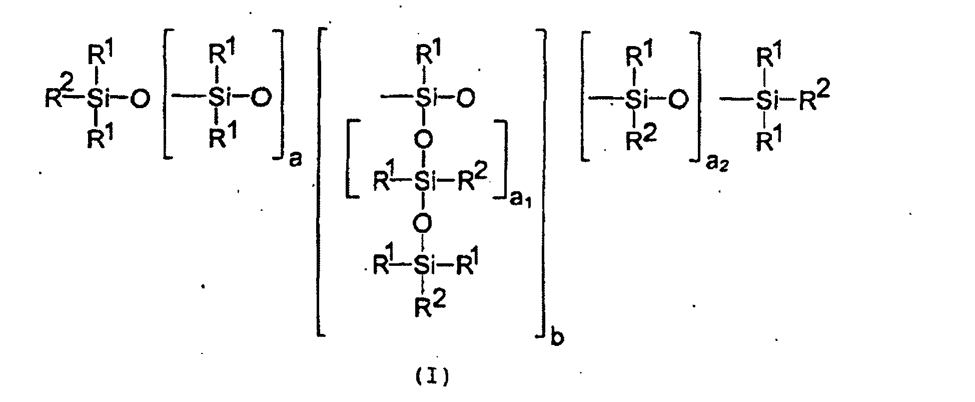 dans laquelle les substituants et les indices ont les significations suivantes :
R¹ représentent des radicaux hydrocarbonés aliphatiques ou aromatiques, identiques ou différents, ayant de 1 à 10 atomes de carbone, qui portent éventuellement un groupe triméthylsilyle,
R² représentent des radicaux R¹ identiques ou différents ou H, étant entendu qu'au moins un radical R² représente H,
a, a₁, identiques ou différents, vont de 0 à 500,
a₂ va de 0 à 500,
b va de 0 à 5
en présence de catalyseurs au platine ou au rhodium, sur
A) des polyhydroxyalcényléthers de formule générale II 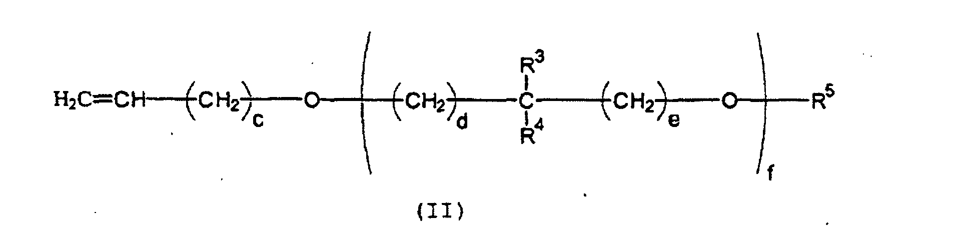 dans laquelle les substituants et les indices ont les significations suivantes :
R³ = H, -(CH₂)OH, un radical hydrocarboné aromatique ou aliphatique ayant de 1 à 10 atomes de carbone, -OH
R⁴ = H, -(CH₂)OH, un radical hydrocarboné aromatique ou aliphatique ayant de 1 à 10 atomes de carbone, -OH
R⁵ = H, -(CH₂)OH, un radical hydrocarboné aromatique ou aliphatique ayant de 1 à 10 atomes de carbone,
c = 0 à 10,
d = 0 à 10,
e = 0 à 10,
f = 1 à 10,
étant entendu qu'au moins deux groupes OH sont présents, et réaction subséquente, partielle ou totale, éventuellement catalysée par une base, des groupes OH avec P₂O₅ ou de l'acide polyphosphorique
ou par fixation par addition
B) de composés obtenus par réaction partielle ou totale, éventuellement catalysée par une base, des groupes OH de polyhydroxyalcényléthers de formule générale II, étant entendu qu'au moins deux groupes OH sont présents, avec P₂O₅ ou de l'acide polyphosphorique.

2. Siloxanes à fonction polyphosphate selon la revendication 1, **caractérisés en ce qu'**au moins 90 % des radicaux R1 sont des radicaux méthyle.

3. Siloxanes à fonction polyphosphate selon la revendication 1 et/ou la revendication 2, **caractérisés en ce que** les radicaux R³ et R⁴ dans les composés de formule générale (II) représentent -CH₂-OH et/ou -CH₂-CH₃, étant entendu qu'au moins trois groupes OH sont présents par molécule.

4. Siloxanes à fonction polyphosphate selon l'une quelconque des revendications 1 à 3, **caractérisés en ce que** c) est 0 ou 1 et f) va de 1 à 3.

5. Procédé pour la préparation de composés de type organosiloxane selon l'une quelconque des revendications 1 à 4, par fixation par addition d'organopolysiloxanes de formule générale I 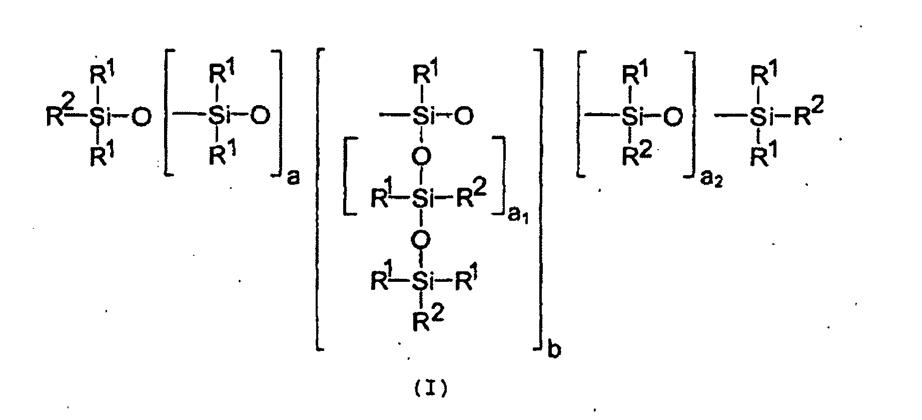 dans laquelle les substituants et les indices ont les significations suivantes :
R¹ représentent des radicaux hydrocarbonés aliphatiques ou aromatiques, identiques ou différents, ayant de 1 à 10 atomes de carbone, qui portent éventuellement un groupe triméthylsilyle,
R² représentent des radicaux R¹ identiques ou différents ou H, étant entendu qu'au moins un radical R² représente H,
a, a₁, identiques ou différents, vont de 0 à 500,
a₂ va de 0 à 500,
b va de 0 à 5
en présence de catalyseurs au platine ou au rhodium, sur
A) des polyhydroxyalcényléthers de formule générale II 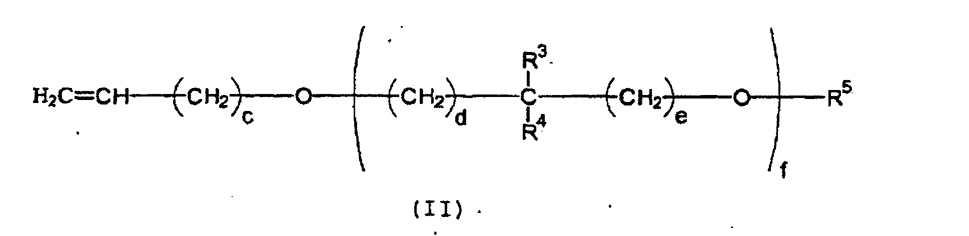
R³ = H, -(CH₂)OH, un radical hydrocarboné aromatique ou aliphatique ayant de 1 à 10 atomes de carbone, -OH
R⁴ = H, -(CH₂)OH, un radical hydrocarboné aromatique ou aliphatique ayant de 1 à 10 atomes de carbone, -OH
R⁵ = H, -(CH₂)OH, un radical hydrocarboné aromatique ou aliphatique ayant de 1 à 10 atomes de carbone,
c = 0 à 10,
d = 0 à 10,
e = 0 à 10,
f = 1 à 10,
étant entendu qu'au moins deux groupes OH sont présents, et réaction subséquente, partielle ou totale, éventuellement catalysée par une base, des groupes OH avec P₂O₅ ou de l'acide polyphosphorique
ou par fixation par addition
B) de composés obtenus par réaction partielle ou totale, éventuellement catalysée par une base, des groupes OH de polyhydroxyalcényléthers de formule générale II, étant entendu qu'au moins deux groupes OH sont présents, avec P₂O₅ ou de l'acide polyphosphorique.

6. Émulsions ou dispersions aqueuses, contenant des siloxanes à fonction polyphosphate, selon l'une quelconque des revendications 1 à 4 et 5, à une concentration de 0,01 à 50 % en poids.

7. Utilisation des émulsions ou dispersions aqueuses selon la revendication 6, en tant qu'additif à des concentrations de 0,01 à 50,0 % en poids, par rapport à la composition totale, pour le traitement de fibres et d'objets plats à base de matériaux organiques et/ou de matériaux inorganiques.

8. Utilisation de siloxanes à fonction polyphosphate selon la revendication 6, pour le traitement de fibres, de tissus, de non-tissés, d'objets plats, à base de matériaux organiques et/ou de matériaux inorganiques tels que le métal, le verre, la céramique, le papier, les cartonnages.

9. Utilisation de siloxanes à fonction polyphosphate selon la revendication 6, pour le traitement de textiles à base de fibres animales, végétales et/ou synthétiques.

10. Utilisation de siloxanes à fonction polyphosphate selon la revendication 6, pour le traitement du cuir.
